# EUROPÄISCHE PATENTSCHRIFT

(11) **EP 0 707 329 B1**
(45) Veröffentlichungstag und Bekanntmachung des Hinweises auf die Patenterteilung: **12.01.2000**
(21) Anmeldenummer: 95111312.5
(22) Anmeldetag: 19.07.1995
(51) Int. Cl.: H01H 27/00, F16P 3/08

(54) **Sicherheitsschalter**
Safety switch
Interrupteur de sécurité

(30) Priorität: 13.10.1994 DE 4436579
(43) Veröffentlichungstag der Anmeldung: 17.04.1996
(73) Patentinhaber: HANS BERNSTEIN SPEZIALFABRIK FÜR SCHALTKONTAKTE GmbH & CO., 32457 Porta Westfalica (DE)
(72) Erfinder: Wecke, Rolf, Dipl.-Ing., D-31675 Bückeburg (DE); Mönnings, Roland, Dipl.-Ing., D-32457 Porta Westfalica (DE); Hoppmann, Ralph, D-32425 Minden (DE)
(74) Vertreter: Stracke, Alexander, Dipl.-Ing.

(56) Entgegenhaltungen:
- EP-A- 0 117 396
- EP-A- 0 609 672
- WO-A-91/10247
- DE-C- 4 338 910
- US-A- 4 963 706

## Beschreibung

Die Erfindung betrifft einen Sicherheitsschalter mit einem Gehäuse, in dem ein kontakttragender Schaltstößel abgefedert hin- und herbeweglich gelagert ist, der durch ein drehbar gelagertes Schaltrad betätigbar ist, das seinerseits durch einen Betätigter adaptierter Formgestalt im Sinne der Schalterbetätigung drehbar ist, für den im Gehäuse auf zwei Seiten Anfahröffnungen vorgesehen sind, wobei dem Schaltrad im Sinne der Verriegelung seiner Drehbewegung auf beiden Seiten unter Federwirkung stehende Riegeleinrichtungen zugeordnet sind, die mit dem adaptierten Betätiger gegen die Federkraft in eine das Schaltrad freigebende Stellung bewegbar sind.

Derartige Sicherheitsschalter dienen der zwangsweisen Abschaltung der Stromzufuhr, beispielsweise wenn eine Schutzabdeckung von einem Gerät, einer Maschine oder dergleichen entfernt wird, Gehäusetüren geöffnet werden und dergleichen. Es besteht dabei im Sinne der Sicherheitsfunktion das Erfordernis, nach Möglichkeit dafür Sorge zu tragen, daß nicht Unbefugte oder grundsätzlich Befugte unzeitig, mit Hilfe einfach nachzubildender Betätiger den Schalter im Sinne seiner Einschaltung betätigen können. Da herstellerseitig bei derartigen Sicherheitsschaltern nicht von vornherein feststeht, in welcher Raumlage ein derartiger Sicherheitsschalter beim Anwender angebracht wird, besteht im Hinblick auf entsprechende Anwenderfreundlichkleit in Verbindung mit der Geringhaltung der Typenzahl derartiger Sicherheitsschalter auch der Wunsch, diese so zu konzipieren, daß sie beispielsweise von zwei unterschiedlichen Seiten vom Betätiger angefahren werden können. Bei einem bekannten Sicherheitsschalter der gattungsgemäßen Art (DE 31 00 862 C2, DE 33 30 109 C2) ist das Schaltrad im wesentlichen mehrfach geteilt. Ein mittlerer Teil wirkt mit dem die Kontakte tragenden Stößel zusammen, während seitlich vorgesehene Schaltradteile durch einen Betätiger, der durch Öffnungen an zwei verschiedenen Gehäuseseiten einfahren kann, parallel zur Drehachse des Schaltrades gegen die Kraft von Rückstellfedern verlagert werden können, wodurch Ansätze am Stößel, die mit Sperrflächen an diesen verlagerbaren Schaltradteilen zusammenwirken, mit diesen Sperrflächen außer Eingriff geraten. Das Schaltrad ist dabei ausgehend von einer Mittelposition bei Benutzung der einen Anfahröffnung in der einen Drehrichtung, bei Benutzung der anderen Anfahröffnung in der anderen Drehrichtung, jeweils im Sinne der Schalterbetätigung, verdrehbar.

Da Teile des Schaltrades selbst Verriegelungsfunktion erfüllen müssen und sie auch in zwei unterschiedlichen Richtungen funktionieren müssen, sind viele Freiheitsgrade erforderlich, so daß die Manipulationssicherheit verbesserungsfähig erscheint. Die Verlagerung der an der Verriegelung beteiligten Schaltradteile parallel zur Drehachse des Schaltrades vergrößert die Baubreite eines derartigen Sicherheitsschalters beträchtlich.

Es sind andererseits Sicherheitsschalter grundsätzlich vergleichbaren Aufbaus bekannt, bei denen zu beiden Seiten des Schaltrades oder eines Steuerkurventeiles Verriegelungselemente vorgesehen sind, die sich in einer Ebene senkrecht zur Längserstreckung der Drehachse des Schaltrades bewegen. Es handelt sich dort bei den Verriegelungsmechanismen um hochkomplizierte mehrteilige Kuppelgetriebe, die in Herstellung und Montage teuer sind und durch die Verwendung von Kulissenhebeln, Gelenkzapfen und dergleichen gegenüber einer Gewaltanwendung empfindlich sind. Bei diesen Sicherheitsschaltern befinden sich ferner die Verriegelungselemente seitlich außerhalb des Schaltrades und sind am angrenzenden Gehäuse geführt. Die Anfahrröffnungen müssen entsprechend breit sein. Die Manipulationssicherheit ist nur zweidimensional zu sehen, da man beispielsweise mit zwei Schraubendrehern die beiden Verriegelungselemente betätigen kann und bei entsprechender Einsteckung noch Raum bleibt, das Schaltrad dann zu betätigen. Trotz des komplizierten Aufbaus ist somit die Manipulationssicherheit auch hier verbesserungsbedürftig.

Der vorliegenden Erfindung liegt die Aufgabe zugrunde, einen Sicherheitsschalter der gattungsgemäßen Art zu schaffen, bei dem die Möglichkeit der Auswahl einer von unterschiedlichen Anfahrrichtungen und eine sehr hohe Manipulationssicherheit mit einem einfachen, platzsparenden konstruktiven Aufbau erreicht werden.

Die erfindungsgemäße Lösung besteht bei einem gattungsgemäßen Sicherheitsschalter darin, daß in dem Schaltrad, mit diesem drehbar, auf jeder seiner Seiten ein Riegelstück im wesentlichen radial zur Schaltradachse bewegbar angeordnet ist, die beiden Riegelstücke 2, jeweils einer der Anfahröffnungen zugeordnete, mit dem adaptierten Betätiger im Sinne der Radialverlagerung zusammenwirkende Abschnitte aufweisen und die beiden Riegelstücke jeweils einen Verriegelungsabschnitt aufweisen, der mit einem entsprechend verriegelnd ausgebildeten Abschnitt des Gehäuses oder der dafür drehfest im Gehäuse angeordneten Schaltradachse zusammenwirkt. Die beiden im Schaltrad integrierten Riegelstücke haben nur einen geringen Freiheitsgrad. Die Gesamtanordnung baut außerordentlich kompakt und platzsparend, da die Riegelstücke seitlich im Schaltrad angeordnet sind. Es werden insgesamt auch nur zwei Riegelstücke benötigt. Die Verlagerbarkeit radial zur Schaltradachse in den Seitenflächen des Schaltrades wirkt an der kompakten und schmalen Bauweise des Schalters mit.

Dadurch, daß die Riegelstücke im Schaltrad sitzen und demzufolge bei Betätigung des Schaltrades mitdrehen, ergibt sich eine außerordentliche Manipulationssicherheit. Es besteht das Erfordernis, die Riegelstücke nach Überführung in die Entriegelungsstellung während der Drehung des Schaltrades in der entriegelten Stellung gedrückt zu halten. Es ergibt sich ein hochkomplizierter, räumlich wirkender Betätiger mit dreidimensionaler Manipulationssicherheits-Auslegung, der nicht schnell und einfach handwerklich nachgebaut werden kann. Die Anfahröffnung kann insgesamt außerordentlich schmal gehalten werden. Selbst wenn man ein einfaches Blech nachbauen wollte, an dem seitliche Vorsprünge oder dergleichen zur Betätigung der Verriegelungselemente im Schaltrad vorhanden währen, wäre der Schalter nicht zu manipulieren, da das Schaltrad dreht, sich bezogen auf ein solches Manipulationsblech also weiterdrehen würde und damit eine Blockade an einem solchen Manipulationsblech für das Schaltrad aufträte.

Weitere bevorzugte Ausgestaltungen sind in den Unteransprüchen gekennzeichnet.

Zwei Ausführungsbeispiele eines Sicherheitsschalters gemäß der Erfindung werden nachstehend unter Bezugnahme auf die Zeichnung näher beschrieben.
Es zeigen
- Figur 1: den Schalt- und Verriegelungsmechanismus eines Sicherheitsschalters gemäß der Erfindung in sprengbildlicher Darstellung,
- Figuren 2a - d: eine Seitenansicht des Schaltmechanismus nach Figur 1 mit angrenzendem Gehäusebereich jeweils in verschiedenen Phasen einer Schalterbetätigung mit einem adaptierten Betätiger,
- Figur 3: eine weitere Ausführungsform eines Schaltmechanismus eines Sicherheitsschalters gemäß der Erfindung gemäß sprengbildlicher Darstellung,
- Figuren 4a - d: den Schaltmechanismus nach Figur 3 in Seitenansicht mit angrenzendem Gehäusebereich in unterschiedlichen Lagen während einer Schalterbetätigung mit einem adaptierten Betätiger.

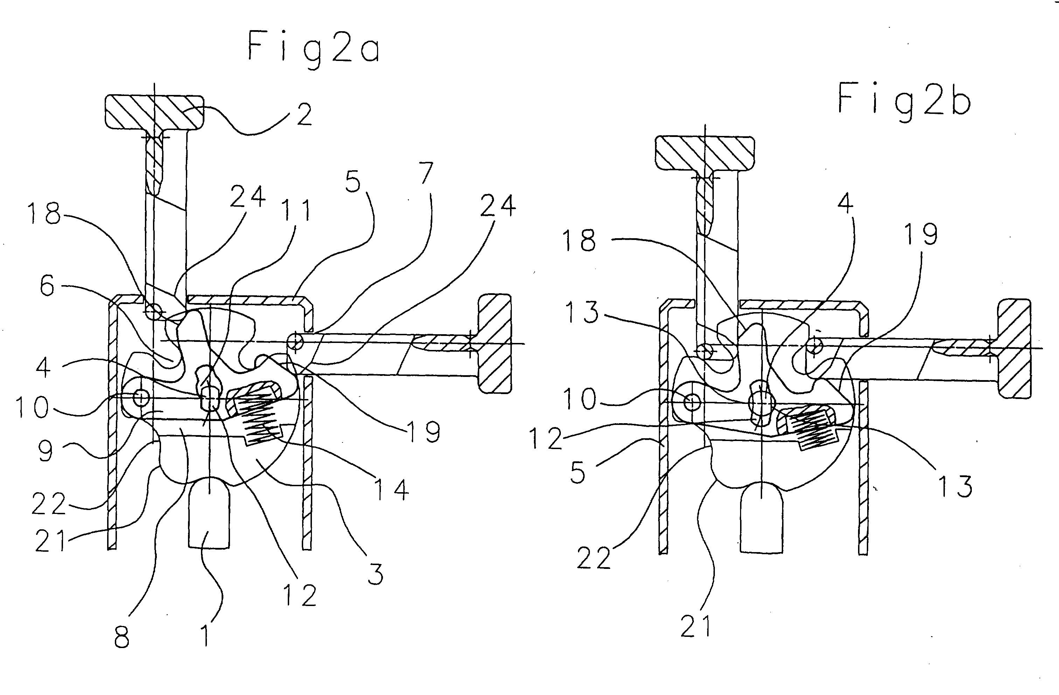

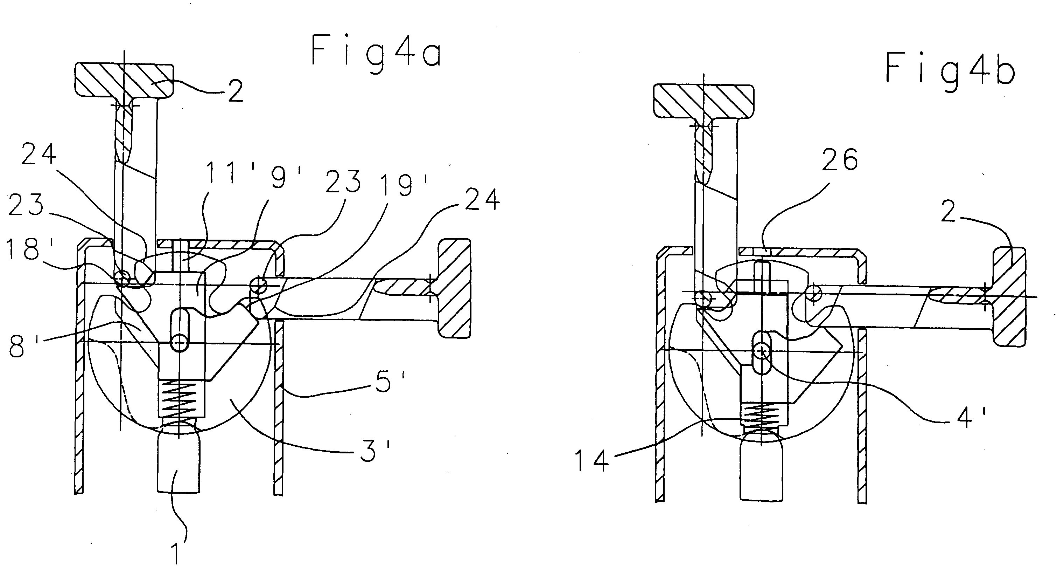

Der grundsätzliche Aufbau derartiger Sicherheitsschalter, bestehend aus einem Gehäuse mit der üblichen Schalterelektrik ist bekannt und wird hier nicht näher beschrieben. In diesem Gehäuse des Sicherheitsschalters ist ferner ein Schaltstößel 1 für die Schalter-Kontaktbetätigung gegen die Kraft einer Feder verschieblich geführt. Der Schaltstößel 1 kann nur mittels eines speziellen Betätigers 2 über die nachfolgend beschriebene spezielle Schalt- und Verriegelungsmechanik betätigt werden. Das mit dieser Schalt- und Verriegelungsmechanik zusammenwirkende Ende des Schaltstößels 1 ist in den Figuren 2a - d und Figuren 4a - d angedeutet.

Die genannte Mechanik beinhaltet ein Schaltrad 3, das auf einer Achse 4 drehbar gelagert ist, die ihrerseits in angrenzenden Bereichen eines Gehäuseabschnittes 5 fest und undrehbar angeordnet ist. Das Schaltrad 3 hat im dargestellten Ausführungsbeispiel zwei um 90° zueinander versetzt liegende Radialnuten 6, in die jeweils, je nach Anfahrrichtung, ein Element des noch zu beschreibenden Betätigers 2 im Sinne der Verdrehung des Schaltrades 3 aus einer Ausgangsstellung in eine Schalt-Endstellung eingreifen kann, soweit diese Verdrehung in noch zu beschreibender Weise verriegelt ist.

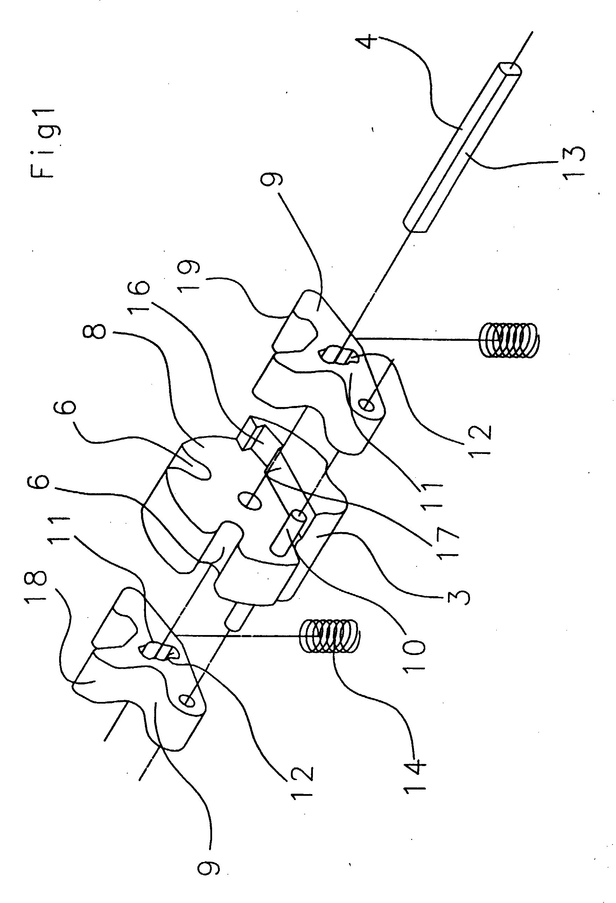

Der genannte Gehäuseabschnitt 5 ist zweckmäßig als Haube ausgebildet, die die gesamte hier betroffene Schalt- und Verriegelungsmechanik aufnimmt. Die Gehäusehaube 5 ist dabei mit dem hier nicht dargestellten Schaltergehäuse im übrigen durch eine Rastverbindung schnappend rastend zusammensetzbar. Die Gehäusehaube 5 hat im dargestellten Ausführungsbeispiel beispielsweise auf einer Seitenfläche sowie auf der Oberseite jeweils eine Anfahröffnung 7 für den adaptierten Betätiger 2. Da die Gehäusehaube 5 die gesamte Schalt und Verriegelungsmechanik aufnimmt, ist sie ohne weiteres mit dieser Mechanik um 180° versetzbar in zwei Stellungen mit dem Schaltergehäuse im übrigen zu verrasten, so daß insgesamt vier unterschiedliche Anfahrrichtungen vorhanden sind. Die für einen vorbestimmten Anwendungsfall nicht benötigte Anfahröffnung 7 in der Gehäusehaube 5 wird zur Vermeidung einer Verschmutzungsgefahr zweckmäßig durch ein Verschließstück dicht verschlossen. In dem Schaltrad 3 sind auf jeder seiner nach außen weisenden Stirnflächen in entsprechende Aussparungen 8 Riegelstücke 9 schwenkbeweglich jeweils auf einem Lagerzapfen 10 in einer Bewergungsebene senkrecht zur Achse 4 gelagert. Die Lagerzapfen 10 befinden sich in einem vorgegebenen Abstand zur Achse 4. Die schwenkbaren Riegelstücke 9 werden im dargestellten Ausführungsbeispiel nach den Figuren 1 - 2d ebenfalls von der Achse 4 durchquert. Diese Zone des Durchtrittes der Achse 4 durch die Riegelstücke 9 ist als Verriegelungsabschnitt 11 ausgebildet, der im mittleren Bereich einen kreisrunden Durchtritt für die Achse 4 hat, an den sich nach beiden Seiten in Verschwenkrichtung der Riegelstücke 4 Verriegelungsnuten 12 anschließen.

Die Achse 4 weist zumindest im Durchtrittsbereich durch die Riegelstücke 9 verriegelnd ausgebildete Abschnitte auf. Im dargestellten Ausführungsbeispiel ist sie über die ganze Länge mit zwei einander gegenüberliegenden Verriegelungsflächen 13 versehen.

Die Riegelstücke 9 werden in ihrer noch zu beschreibenden Verriegelungsstellung durch eine Feder 14 gedrückt, für die die Verriegelungsstücke 9 eine Aufnahmetasche 15 haben. Das andere Ende der Feder 14 ist in einer Ausklinkung 16 in der die Aussparung 8 begrenzenden Schulter 17 des Schaltrades 3 abgestützt.

Im Ausführungsbeispiel nach den Figuren 1 - 2d sind die Riegelstücke 9 im wesentlichen als dreiarmige Hebel ausgebildet. Der eine Hebelarm dient der Lagerung auf dem Lagerzapfen 10. Ein weiterer Hebelarm trägt an seinem freien Ende einen schräg verlaufenden Flächenabschnitt 18, der dann zum Einsatz und zum Zusammenwirken mit dem Betätiger 2 kommt, wenn dieser die oben liegende Anfahröffnung 7 durchtritt. Der dritte Hebelarm hat an seinem freien Ende ebenfalls einen schräg verlaufenden Flächenabschnitt 19, der dann vom Betätiger 2 beaufschlagt wird, wenn dieser durch die seitlich liegende Anfahröffnung 7 tritt.

Im mittleren Bereich des Schaltrades 3 sind an seinem Außenmantel diejenigen Wirkkurven ausgebildet, mit denen der Schaltstößel 1 zusammenwirkt. In der Ausgangsstellung (Figur 2a) ruht der abgefederte Schaltstößel 1 in einer kleinen Umfangsausnehmung 20. Diese geht über eine Steuerkurve 21 in eine deutlich tiefere Umfangsausnehmung 22 über, in der nach der Schalterbetätigung der Schaltstößel 1 in einer gegenüber der Ausgangsstellung deutlich weiter in das Schaltrad 3 eingefahrenen Schaltstellung liegt.

Der Entriegelungs- und Schaltvorgang für die vorstehend beschriebene Ausführungsform soll nachfolgend im Zusammenhang auf die Figuren 2a - 2d beschrieben werden. In der in Figur 2a dargestellten Ausgangsstellung drücken die Federn 14 die Riegelstücke 9 gesehen auf die Zeichnung in eine untere Schwenklage, in der die verriegelnd wirkenden Flächenabschnitte 13 der ortsfest in der Gehäusehaube 5 verankerten Achse 4 in der betroffenen Verriegelungsnut 12 der Riegelstücke liegen, dergestalt, daß in dieser verriegelten Ausgangslage sich die Riegelstücke 9 nicht um die Achse 4 drehen können. Durch die vom Drehmittelpunkt abständige Drehlagerung der Riegelstücke 9 auf den Lagerzapfen 10 am Schaltrad 3 kann sich in dieser Position auch das Schaltrad 3 nicht drehen.

Der adaptierte und in seiner Raumform komplizierte Betätiger 2 ist in seinem mit dem Schalt- und Verriegelungsmechanismus zusammenwirkenden Bereich im wesentlichen bügelförmig ausgebildet und hat einerseits einen Quersteg 23 sowie ferner im vorderen Bereich seiner beiden Bügelarme spezielle Schaltstücke 24. Die Figur 2a illustriert, daß für beide Anfahröffnungen jeweils die zur Entriegelung mit dem Betätiger 2 zusammenwirkenden Flächenabschnitte 18 und 19 räumlich versetzt rückspringend zu den mit dem Quersteg 23 des Betätigers 2 zusammenwirkenden Radialnuten 6 des Schaltrades 3 liegen, so daß die Entriegelung überhaupt nur mit den speziellen zusätzlichen Schaltstücken 24 am Betätiger 2 in Gang gesetzt werden kann. Aus der Anschauung der Figuren 2a und 2b ergibt sich, daß sowohl bei Benutzung der oben liegenden Anfahröffnung wie auch bei Benutzung der seitlich liegenden Anfahröffnung zunächst die seitlichen Schaltstücke 24 in dem einen Fall auf den schrägen Flächenabschnitt 18 des Riegelstückes 9, im anderen Anwendungsfall auf den schrägen Flächenabschnitt 19 des Riegelstückes 9 wirken und hierdurch jeweils die Riegelstücke 9 gegen die Kraft der Federn 14 gesehen auf die Zeichnung in einer radial zur Achse 4 gerichteten Bewegung derart verschwenkt werden, daß die betroffene Verriegelungsnut 12 von den Verriegelungsflächen 13 der Achse 4 freikommt, die Achse 4 also dann (Figur 2b) im mittleren Bereich des Verriegelungsabschnittes 11 der Riegelstücke 9 liegt, so daß in dieser Raumlage eine Drehbewegung der Riegelstücke 9 auf der Achse 4 und damit auch eine Drehbewegung des Schaltrades 3 ermöglicht ist.

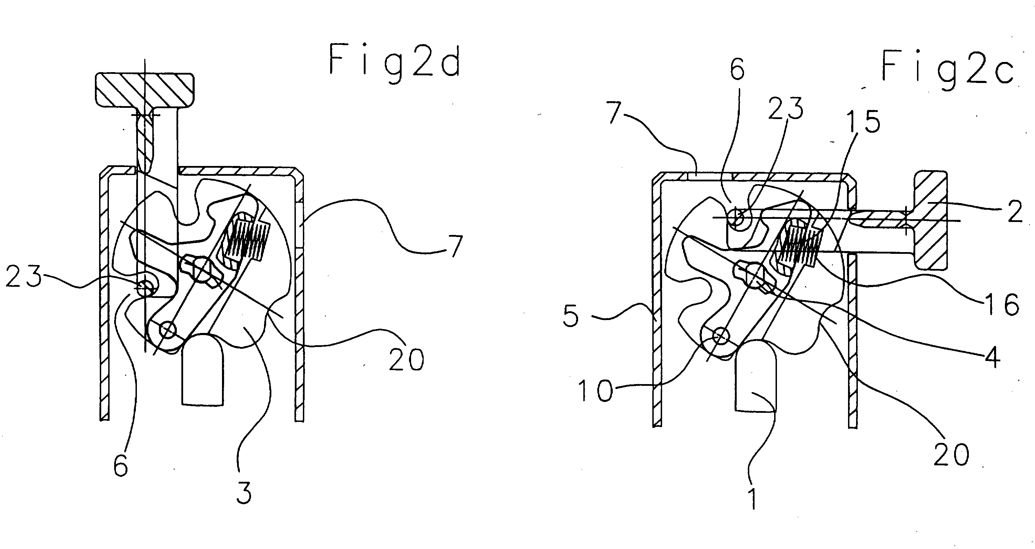

Wird ausgehend von dieser Stellung der Betätiger 2 weiter eingefahren, gelangt der Betätiger 2 mit seinen Schaltstücken 24 an den schrägen Flächenabschnitten 18 bzw. 19 der betroffenen Hebelarme der Riegelstücke 9 vorbei und der Quersteg 23 des Betätigers 2 kann in die jeweils betroffene Radialnut 6 des Schaltrades 3 eintreten und bei weiterer Enführung das Schaltrad 3 nunmehr verdrehen, wodurch nach Lauf über die Steuerkurve 21 das Ende des Schaltstößels 1 in die tiefe Umfangsausnehmung 22 im Außenmantel des Schaltrades 3 gelangt und damit die Schaltstellung des Schaltstößels 1 erreicht ist. Letzteres ist in Figur 2c für die Benutzung der seitlichen Anfahröffnung 7, in der Figur 2d für die Benutzung der oberen Anfahröffnung 7 illustriert.

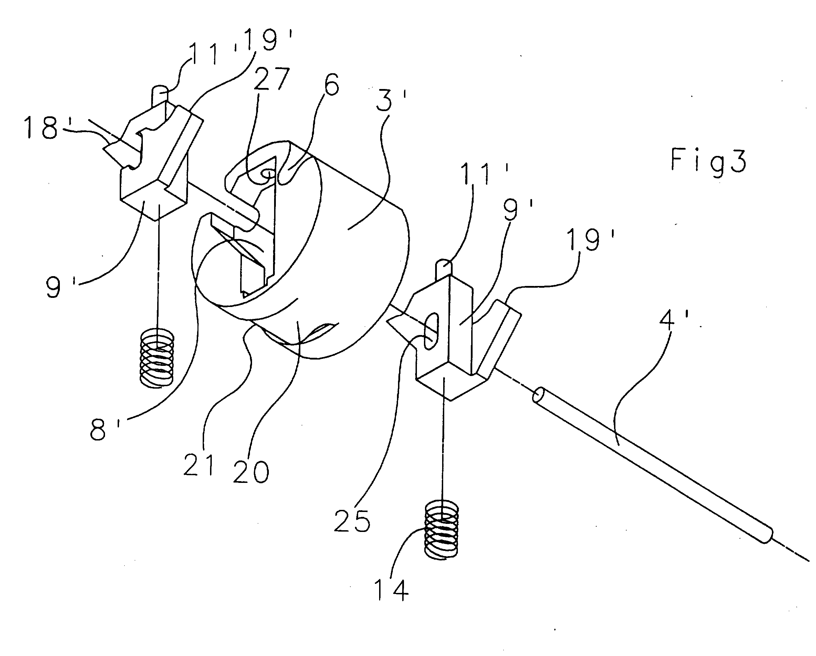

Bei dem in den Figuren 3, 4a - d dargestellten Ausführungsbeispiel ist wiederum ein Schaltrad 3' drehbar auf einer Achse 4' kreisrunden Querschnittes gelagert. Das Schaltrad 3' hat ebenfalls Radialnuten 6 sowie eine kleine Umfangsausnehmung 20, die mit einer Steuerkurve 21 in eine tiefe Umfangsausnehmung 22 übergeht. In Aussparungen 8'des Schaltrades 3' sind Riegelstücke 9' verschieblich geführt, diezentral einen Längschlitz 25 für den Durchtritt der Achse 4' haben. Die Aussparungen 8' sind dabei an ihrem einen Ende als Taschenaufnahme für die Federn 14 ausgebildet. Die Riegelstücke 9' haben, jeweils einer der Anfahröffnungen 7 zugeordnet, armartige Vorsprünge. Der der seitlichen Anfahröffnung 7 zugeordnete Vorsprung trägt an seinem freien Ende zum Zusammenwirken mit den Schaltstücken 24 des Betätigers 2 einen schrägen Flächenabschnitt 19', während derder oberen Anfahröffnung 7 zugeordnete Vorsprung einen sich im wesentlichen senkrecht zur Anfahrrichtung erstreckenden Flächenabschnitt 18' aufweist. Der Verriegelungsabschnitt 11' der Riegelstücke 9' wird durch einen von ihrem einen Ende vorstehenden Bolzen gebildet, für den im gegenüberliegenden Bereich der Gehäusehaube 5' als mit ihm zusammenwirkendes Verriegelungselement eine Steckbohrung 26 vorgesehen ist.

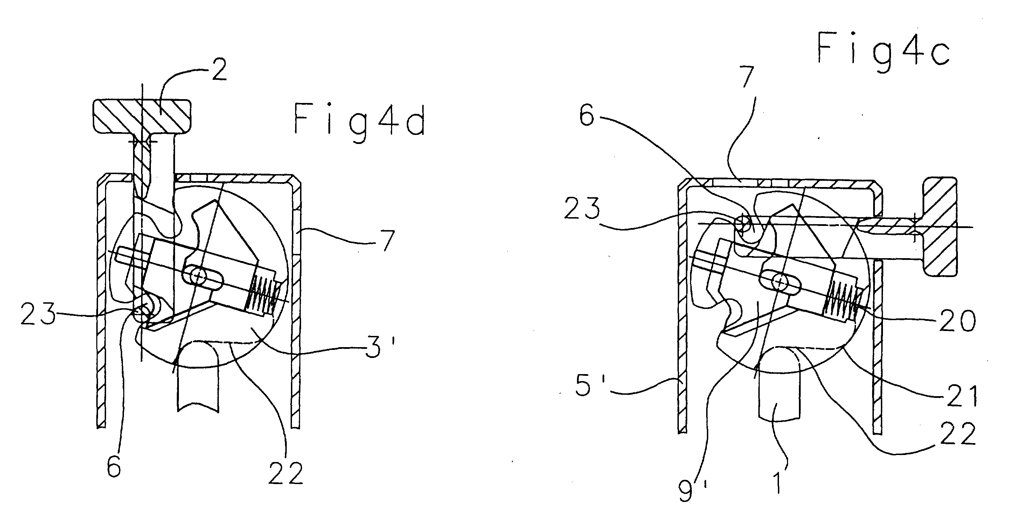

Der Entriegelungs- und Schaltvorgang stellt sich bei diesem Ausführungsbeispiel wie folgt dar:
In der verriegelten Ausgangsstellung (Figur 2a) werden die Riegelstücke 9' durch die Federn 14 in eine Stellung gedrückt, in der die Bolzen 11' verriegelend in den Steckbohrungen 26 stecken. Da auch jeweils auf jeder Seite ein Abschnitt des Schaltrades 3' eine Durchgangsbohrung 27 für die Bolzen 11' aufweist und ferner im Hinblick auf die Führungsflächen für die Riegelstücke 9' in den Aussparungen 8' ist dadurch auch das Schaltrad 3' an jedweder Drehung gehindert. Fährt nun der Betätiger 2 entweder in die untere oder die seitliche Anfahröffnung 7 ein, treffen seine Schaltstücke 24 bei Wahl der oberen Anfahröffnung 7 auf den quer in der Bewegungsbahn liegenden Flächenabschnitt 18' des Riegelstückes 9', bei Wahl der seitlichen Anfahröffnung 7 auf den Flächenabschnitt 19'. In beiden Fällen werden hierdurch die Riegelstücke 9' gegen die Kraft der Federn 14 zurückgeddrängt, wobei sie, geführt in der Aussparung 8', wiederum eine Bewegung radial zur Achse 4' vollführen. Durch diese Verschiebebewegung gelangt der Bolzen 11' aus der Steckbohrung 26 der Gehäusehaube 5', wodurch die Verriegelung aufgehoben ist (Figur 4b). Bei weiterem Einfahren des Betätigers 2 gelangt dann auch bei diesem Ausführungsbeispiel dessen Quersteg 23 in eine der Radialnuten 6 des Schaltrades 3'. Das Schaltrad 3' samt Riegelstück 9' kann verdreht werden und damit der Schaltstößel 1' aus der kleinen Umfangsausnehmung 20 in die tiefe Umfangsausnehmung 22 gelangen, so daß die Schaltstellung erreicht ist. Letzteres ist für die Benutzung der seitlichen Anfahröffnung 7 in Figur 4c, für die Benutzung der unteren Anfahröffnung 7 in Figur 4d illustriert.

Auch bei dieser Ausführungsform ist die Gehäusehaube 5' um 180° versetzbar mit dem Schaltergehäuse im übrigen verrastet. Auch bei dieser Ausführungsform liegen, wie in Figur 4a illustriert, in der verriegelten Ausgangsstellung die Flächenabschnitte 18', 19' räumlich versetzt rückspringend zu den Radialnuten 6 des Schaltrades 3'.

## Patentansprüche

1. Sicherheitsschalter mit einem Gehäuse (5, 5'), in dem ein kontakttragender Schaltstößel (1) hin- und herbeweglich gelagert ist, der durch ein drehbar gelagertes Schaltrad (3, 3') betätigbar ist, das seinerseits durch einen Betätiger (2) in adaptierter Formgestalt im Sinne der Schalterbetätigung drehbar ist, für den im Gehäuse (5, 5') auf zwei Seiten Anfahröffnungen (7) vorgesehen sind, wobei dem Schaltrad (3, 3') im Sinne der Verriegelung seiner Drehbewegung auf beiden Seiten unter Federwirkung stehende Riegeleinrichtungen (9, 9') zugeordnet sind, die mit dem adaptierten Betätiger (2) gegen die Federkraft in eine das Schaltrad für die Drehbewegung freigebende Stellung bewegbar sind, **dadurch gekennzeichnet**, daß in dem Schaltrad (3, 3'), mit diesem drehbar auf jeder seiner Seiten ein Riegelstück (9, 9') im wesentlichen radial zur Schaltradachse (4, 4') bewegbar angeordnet ist, die beiden Riegelstücke (9, 9') zwei jeweils einer der Anfahröffnungen (7) zugeordnete und mit dem adaptierten Betätiger (2) im Sinne ihrer Radialverlagerung zusammenwirkende Flächenabschnitte (18, 18'; 19, 19') aufweisen und die beiden Riegelstücke (9, 9') jeweils einen Verriegelungsabschnitt (11, 12; 11') aufweisen, der mit einem entsprechend verriegelnd ausgebildeten Abschnitt (13; 26) des Gehäuses (5') oder der dafür drehfest im Gehäuse (5) angeordneten Schaltradachse (4) zusammenwirkt.

2. Sicherheitsschalter nach Anspruch 1, dadurch gekennzeichnet, daß mit dem adaptierten Betätiger (2, 23, 24) zusammenwirkende Flächenabschnitte (18, 18'; 19, 19') der Riegelstücke (9, 9') räumlich versetzt rückspringend zu mit dem Betätiger zusammenwirkenden Flächenabschnitten in Radialnuten (6) des Schaltrades (3, 3') liegen.

3. Sicherheitsschalter nach einem der vorhergehenden Ansprüche, dadurch gekennzeichnet, daß das Schaltrad (3, 3') mit seinen Riegelstücken (9, 9') und seiner Achse (4, 4') in einem Gehäuseabschnitt angeordnet ist, der als Gehäusehaube (5, 5') ausgebildet ist, die mit dem Schaltergehäuse im übrigen jeweils um 180° versetzt verbindbar ist.

4. Sicherheitsschalter nach einem der vorhergehenden Ansprüche, dadurch gekennzeichnet, daß im mittleren Bereich des Schaltrades (3, 3') an seinem Außenmantel eine Umfangsausnehmung (20) geringer Tiefe für den Schaltstößel (1) gebildet ist und winkelmäßig dazu versetzt eine weitere Umfangsausnehmung (22) deutlich größerer Tiefe vorgesehen ist, wobei die beiden Umfangsausnehmungen über eine Steuerkurve (21) miteinander verbunden sind.

5. Sicherheitsschalter nach Anspruch 2, dadurch gekennzeichnet, daß zum Zusammenwirken mit den rückversetzten Flächenabschnitten (18, 18'; 19, 19') der Riegelstücke (9, 9') an dem Betätiger (2) an seinem Wirkende zu beiden Seiten eines Quersteges (23) Schaltstücke (24) vorgesehen sind.

6. Sicherheitsschalter nach einem der vorhergehenden Ansprüche, dadurch gekennzeichnet, daß die jeweils nicht benötigte Anfahröffnung (7) des Gehäuses (5, 5') dicht verschlossen ist.

7. Sicherheitsschalter nach einem der vorhergehenden Ansprüche, dadurch gekennzeichnet, daß die Riegelstücke (9) abständig vom zentralen Durchtrittsbereich der Achse (4) schwenkbeweglich (auf 10) an dem Schaltrad (3) gelagert sind und sie einen im Durchtrittsbereich der Achse (4) liegenden Verriegelungsabschnitt (11) aufweisen, der zumindest auf einer Seite eines kreisrunden Durchtrittes für die Achse (4) eine Verriegelungsnut (12) beinhaltet, die mit an der Achse (4) gebildeten Verriegelungsflächen (13) zusammenwirkt.

8. Sicherheitsschalter nach einem der vorhergehenden Ansprüche, dadurch gekennzeichnet, daß die Verriegelungsstücke (9) in Form dreiarmiger Hebel ausgebildet sind, wobei der eine Arm der Drehlagerung am Schaltrad (3) dient, die beiden anderen Arme jeweils einer der Anfahröffnungen (7) im Gehäuse (5) zugeordnet sind und diese an ihren freien Enden schräg verlaufende Flächenabschnitte (18, 19) zum Zusammenwirken mit dem Quersteg (23) des Betätigers (2) aufweisen.

9. Sicherheitsschalter nach einem der Ansprüche 1 - 6, dadurch gekennzeichnet, daß die Riegelstücke (9') radial zur Achse (4') verschieblich in Ausnehmungen (8') auf beiden Seiten des Schaltrades (3') geführt sind und sie als Verriegelungsabschnitt einen vorstehenden Bolzen (11') aufweisen, der in der Verriegelungsstellung in eine im angrenzenden Bereich des Gehäuses (5') vorgesehene Steckbohrung (26) greift.

10. Sicherheitsschalter nach einem der Ansprüche 1 - 6 und 9, dadurch gekennzeichnet, daß die Riegelstücke (9') zwei jeweils einer der Anfahröffnungen (7) zugeordnete Vorsprünge aufweisen, an deren freien Ende mit dem Quersteg (23) des Betätigers (2) zusammenwirkende Flächenabschnitte (18', 19') gebildet sind.

## Claims

1. A safety switch comprising a housing (5, 5') in which a contact-bearing switching pushrod (1) is reciprocably mounted, which can be actuated by a rotatably mounted switching wheel (3, 3') which in turn is rotatable by an actuator (2) of suitable configuration for the purposes of switch actuation, for which entry openings (7) are provided in the housing (5, 5') on two sides, wherein associated with the switching wheel (3, 3') for locking of its rotary movement on both sides thereof are lock devices (9, 9') which are subjected to a spring action and which are movable with the suitable actuator (2) against the spring force into a position of releasing the switching wheel for the rotary movement, characterised in that a lock portion (9, 9') is arranged movably substantially radially with respect to the switching wheel axis (4, 4') in the switching wheel (3, 3') rotatably with same on each of its sides, the two lock portions (9, 9') have two surface portions (18, 18'; 19, 19') which are associated with a respective one of the entry openings (7) and which co-operate with the suitable actuator (2) for radial displacement thereof and the two lock portions (9, 9') each have a respective locking part (11, 12; 11') which co-operates with a correspondingly lockingly configured part (13; 26) of the housing (5') or the switching wheel axis (4) which is arranged for that purpose non-rotatably in the housing (5).

2. A safety switch according to claim 1 characterised in that surface portions (18, 18'; 19, 19') of the lock portions (9, 9'), which co-operate with the suitable actuator (2, 23, 24) are disposed in spatially displaced set-back relationship with surface portions, co-operating with the actuator, in radial grooves (6) in the switching wheel (3, 3').

3. A safety switch according to one of the preceding claims characterised in that the switching wheel (3, 3') is arranged with its lock portions (9, 9') and its axis (4, 4') in a housing portion which is in the form of a housing hood (5, 5') which can also be connected to the switch housing displaced through 180° in each case.

4. A safety switch according to one of the preceding claims characterised in that formed in the central region of the switching wheel (3, 3') at its outer periphery is a peripheral opening (20) of small depth for the switching pushrod (1) and provided in angularly displaced relationship therewith is a further peripheral opening (22) of markedly greater depth, the two peripheral openings being connected together by way of a control cam (21).

5. A safety switch according to claim 2 characterised in that switching portions (24) are provided for co-operation with the set-back surface portions (18, 18'; 19, 19') of the lock portions (9, 9') on the actuator (2) at its operative end at both sides of a transverse limb (23).

6. A safety switch according to one of the preceding claims characterised in that the respective entry opening (7) of the housing (5, 5') that is not needed is sealingly closed.

7. A safety switch according to one of the preceding claims characterised in that the lock portions (9) are mounted at a spacing from the central passage region of the axis (4) pivotably (on 10) on the switching wheel (3) and they have a locking part (11) which is disposed in the passage region of the axis (4) and which at least on one side of a round aperture for the axis (4) includes a locking groove (12) co-operating with locking surfaces (13) formed on the axis (4).

8. A safety switch according to one of the preceding claims characterised in that the locking portions (9) are in the form of three-armed levers, wherein the one arm serves for rotary mounting on the switching wheel (3), the other two arms are each associated with a respective one of the entry openings (7) in the housing (5) and same have surface portions (18, 19) extending inclinedly at their free ends for co-operation with the transverse limb (23) of the actuator (2).

9. A safety switch according to one of claims 1 to 6 characterised in that the lock portions (9') are guided radially with respect to the axis (4') displaceably in openings (8') on both sides of the switching wheel (3') and as a locking part they have a projecting pin (11') which in the locking position engages into a plug-in bore (26) provided in the adjoining region of the housing (5').

10. A safety switch according to one of claims 1 to 6 and 9 characterised in that the lock portions (9') have two projections which are each associated with a respective one of the entry openings (7) and at the free ends of which are formed surface portions (18', 19') co-operating with the transverse limb (23) of the actuator (2).

## Revendications

1. Interrupteur de sécurité avec un boîtier (5, 5'), dans lequel est monté avec un mouvement alternatif, un poussoir de commutation (1) faisant contact et pouvant être actionné par une roue de commande (3, 3') qui est montée à rotation et pivote à son tour par l'intermédiaire d'un actionneur (2) qui est réalisé selon une conception adaptée conformément à l'actionnement de l'interrupteur et pour lequel sont prévues dans le boîtier (5, 5'), sur deux côtés, des ouvertures d'accès (7), dans lequel des dispositifs de verrouillage (9, 9') placés des deux côtés et fonctionnant sous l'action d'un ressort sont affectés à la roue de commande (3, 3') dans le sens de blocage de son mouvement de rotation et peuvent se déplacer avec l'actionneur adapté (2) à l'encontre de l'effet de ressort, dans une position libérant la roue de commande pour le mouvement de rotation, caractérisé en ce que, dans la roue de commande (3, 3'), un élément de verrou (9, 9') pivotant avec cette dernière sur chacun de ses côtés, est disposé de façon mobile sensiblement radialement à l'axe de la roue de commande (4, 4'), les deux éléments de verrou (9, 9') présentent deux tronçons de surface (18, 18' ; 19, 19') affectés respectivement à l'une des ouvertures d'accès (7) et coopérant avec l'actionneur (2) adapté, dans le sens de son déplacement radial et les deux éléments de verrou (9, 9') présentent respectivement un tronçon de verrouillage (11, 12 ; 11') qui coopère avec un tronçon (13 ; 26) du boîtier (5') conçu pour verrouiller de manière correspondante ou avec l'axe de la roue de commande (4) disposé de manière fixe dans le boîtier (5).

2. Interrupteur de sécurité selon la revendication 1, caractérisé en ce que les tronçons de surface (18, 18' ; 19, 19') coopérant avec l'actionneur adapté (2, 23, 24) et faisant partie des éléments de verrouillage (9, 9') sont décalés en arrière vers les tronçons de surface coopérant avec l'actionneur, dans des rainures radiales (6) de la roue de commande (3, 3').

3. Interrupteur de sécurité selon l'une des revendications précédentes, caractérisé en ce que la roue de commande (3, 3') est disposée avec ses éléments de verrouillage (9, 9') et son axe (4, 4') dans un tronçon de boîtier réalisé comme enveloppe de boîtier (5, 5') qui peut être assemblée avec le boîtier de l'interrupteur en étant décalée par ailleurs respectivement de 180 °.

4. Interrupteur de sécurité selon l'une des revendications précédentes, caractérisé en ce que, dans la partie centrale de la roue de commande (3, 3'), sur son enveloppe extérieure, une cavité périphérique (20) de profondeur réduite est formée pour le poussoir de commande (1) et une autre cavité périphérique (22) de profondeur nettement plus grande est prévue décalée de façon angulaire par rapport à cette dernière, les deux cavités périphériques étant assemblées l'une avec l'autre par l'intermédiaire d'une came de commande (21).

5. Interrupteur de sécurité selon la revendication 2, caractérisé en ce que, pour la coopération avec les tronçons de surraces (18, 18' ; 19, 19') décalés en arrière et faisant partie des éléments de verrouillage (9, 9'), des éléments de commande (24) sont prévus sur l'actionneur (2) à son extrémité active, des deux côtés d'une tige transversale (23).

6. Interrupteur de sécurité selon l'une des revendications précédentes, caractérisé en ce que l'ouverture d'accès (7) du boîtier (5, 5') qui n'est pas respectivement nécessaire, a une fermeture étanche.

7. Interrupteur de sécurité selon l'une des revendications précédentes, caractérisé en ce que les éléments de verrouillage (9) sont montés à rotation (sur 10) sur la roue de commande (3), à distance de la zone centrale de passage de l'axe (4) et ils présentent un tronçon de verrouillage (11) situé dans la zone de passage de l'axe (4) et comportant au moins, sur un côté d'un passage circulaire pour l'axe (4), une rainure de verrouillage (12) qui coopère avec les surfaces de verrouillage (13) formées sur l'axe (4).

8. Interrupteur de sécurité selon l'une des revendications précédentes, caractérisé en ce que les éléments de verrouillage (9) sont réalisés sous la forme d'un levier à trois bras, l'un des bras servant au pivotement sur la roue de commande (3), les deux autres bras étant affectés respectivement à l'une des ouvertures d'accès (7) dans le boîtier (5) et celles-ci présentant à leurs extrémités libres, des sections de surface (18, 19) obliques pour la coopération avec la tige transversale (23) de l'actionneur (2).

9. Interrupteur de sécurité selon l'une des revendications 1 à 6, caractérisé en ce que les éléments de verrouillage (9') sont guidés radialement par rapport à l'axe (4') en se déplaçant dans des cavités (8'), des deux côtés de la roue de commande (3') et ils présentent comme section de verrouillage, un boulon (11') formant saillie qui, dans la position de verrouillage, s'engage dans un alésage (26) prévu dans la zone adjacente du boîtier (5').

10. Interrupteur de sécurité selon l'une des revendications 1 à 6 et 9, caractérisé en ce que les éléments de verrouillage (9') présentent deux éléments formant saillie affectés respectivement à l'une des ouvertures d'accès (7) et à l'extrémité libre desquelles sont formées des tronçons de surface (18', 19') coopérant avec la tige transversale (23) de l'actionneur (2).
